## Europäisches Patentamt

## European Patent Office

## Office européen des brevets

(19)

(11) Veröffentlichungsnummer: **0 191 405**
**A2**

(12) **EUROPÄISCHE PATENTANMELDUNG**

(21) Anmeldenummer: **86101447.0**

(51) Int. Cl.⁴: **B 60 R 22/20**

(22) Anmeldetag: **04.02.86**

(30) Priorität: 15.02.85 DE 3505304
30.05.85 DE 3519399
05.06.85 DE 3520279
08.11.85 DE 3539722

(43) Veröffentlichungstag der Anmeldung: **20.08.86**
**Patentblatt 86/34**

(84) Benannte Vertragsstaaten: **AT BE CH DE FR GB IT LI LU NL SE**

(71) Anmelder: **Gercken, Karl, Eichleite 16, D-8022 Grünwald (DE)**

(72) Erfinder: **Gercken, Karl, Eichleite 16, D-8022 Grünwald (DE)**

(74) Vertreter: **Patentanwälte Dr. Solf & Zapf, Asamstrasse 8, D-8000 München 90 (DE)**

(54) **Höhenverstellvorrichtung für einen Sicherheitsgurt.**

(57) Die Erfindung betrifft eine Gurthöhenverstellung. In einer C-förmigen Gleitschiene bewegt sich ein Gleitstein, an dem die Umlenkung des Sicherheitsgurtes verschraubt ist. In Ruhestellung verklemmt sich der Gleitstein durch den Zug des Gurtes und die diagonale Belastung einer Feder. Zur sicheren Verrastung helfen Verzahnungen, die an dem Gleitstein und an der Gleitschiene angebracht sind. Zur Verstellung wird am Umlenkbeschlag der Gleitstein nach hinten gedrückt. Dabei kippt der Gleitstein über Nocken und rastet aus. Bei einer weiteren Ausführungsform ist am Gleitelement der obere Gurtumlenkbeschlag schwenkbar befestigt, wobei das Gleitführungselement eine Gleitschiene aus einem Flacheisen und das Gleitelement eine Gleitmuffe ist. Die Gleitschiene hat Flachseiten und Schmalseiten und die Schmalseite mindestens einen Zahn, der aus der Ebene des Flacheisens abgebogen ist. Die Gleitmuffe hat einen Ausschnitt, der sich etwa von der Längsmitte einer Stirnwandung bis in die Bodenwandung erstreckt. Zwischen der Bodenwandung und der Flachseite der Gleitschiene ist eine Druckfeder angeordnet.

– 1 –

M 428 EPA

Karl Gercken, Eichleite 16, 8022 Grünwald

---

Höhenverstellvorrichtung für einen Sicherheitsgurt

---

Die Erfindung bezieht sich auf eine Höhenverstellung des oberen Gurtanlenkpunktes.

Die bekannten Höhenverstellungen sind in Stufen verstellbar und bestehen aus Gleitstangen mit Verrastungen, verschiebbaren Kulissensteinen und Ver- und Entrastungsmechanismen. In dem Kulissenstein ist der obere Gurtumlenkbeschlag verschraubt.

Die stufenweise Verstellung ist unbefriedigend, weil die Rastung bei der Verstellung nicht einfach genug gefunden werden kann und außerdem zu wenig Raststellungen gewährleistet werden.

Aufgabe der Erfindung ist eine stufenlose Höhenverstellvorrichtung des oberen Gurtumlenkbeschlages bzw. eine stufenweise verstellbare Höhenverstellvorrichtung zu schaffen, mit einer einfachen und sicher auffindbaren Verrasteinrichtung, wobei der Aufbau der

- 2 -

Höhenverstellvorrichtung einfach, die Einzelteile
leicht montierbar und außerdem wenig Einzelteile
erforderlich sein sollen.

Diese Aufgabe wird durch die Merkmale der Ansprüche
1, 18, 19, 31, 37 gelöst. Vorteilhafte Ausführungsformen der Erfindung werden in den davon abhängigen
Unteransprüchen gekennzeichnet.

Für die kostengünstige Herstellung sieht eine
Ausführungsform der Erfindung vor, daß die Verstellvorrichtung aus zwei Hauptteilen besteht, wozu
lediglich noch eine Feder, die Einschraubelemente
und alternativ ein Verstellknopf gehören.

Die stufenlose Höhenverstellung wird nach einer
Ausführungsform der Erfindung dadurch gelöst, daß
der obere Gurtumlenkbeschlag in einem Gleitstein
verschraubt ist, der in einer Gleitschiene verschiebbar
angeordnet ist. Der Gleitstein ist rechteckig und
passend zur Gleitschiene geformt. Am oberen Ende
ist ein Gewindeloch für die Befestigung des Gurtumlenkbeschlages vorgesehen. Zwei ausgeprägte Nocken
befinden sich in mittlere Höhe des Gleitsteines
auf den schmalen Stirnseiten. Diese Nocken gleiten
auf den Stirnseiten der Gleitschiene auf einer
Gleitfläche. Über diese Nocken kann der Gleitstein
gekippt werden. Oberhalb des Nockens in Fahrtrichtung
und zum Nocken seitlich versetzt unterhalb des
gegenüberliegenden Nockens gegen die Fahrtrichtung
und zum Nocken seitlich versetzt sind je zwei Verzahnungen angebracht. Diese Verzahnungen verrasten mit entsprechenden Verzahnungen in der Gleitschiene in Ruhestellung. Eine gebogene Blattfeder steckt in einem Loch oberhalb des hinteren Nockens oder unterhalb des vorderen Nockens. Die Blattfeder wird in einer Mulde geführt. Die Blattfeder kippt den Gleitstein über die Nocken und läßt die Verzahnungen ineinanderrasten.

Die Gleitschiene besteht aus einem ausgestanzten Blech, das C-förmig umgekantet ist und den Gleitstein formschlüssig umschließt. Die Gleitschiene wird mit der Karosserie verschraubt.

Das wesentliche Merkmal der Erfindung sind je zwei Verzahnungen an Schmalseiten mit einer Gleitfläche dazwischen für die Nocken des Gleitsteines. Die Verzahnungen der Gleitschiene passen zu den Verzahnungen des Gleitsteines.

Die erfindungsgemäße Höhenverstellvorrichtung funktioniert wie folgt. In Ruhestellung kippt die Feder den Gleitstein über die Nocken. Die Verzahnungen des Gleitsteines verrasten mit den Verzahnungen der Gleitschiene. Zur Verstellung wird über den Umlenkbeschlag oder einen Knopf oberhalb des Gleitsteines der Gleitstein über die Nocken - gegen den Federdruck - gekippt. Die Verzahnungen entrasten. Am Umlenkbeschlag oder am Knopf angreifend wird der Gleitstein nach oben oder unten verschoben. Im Falle eines Unfalles verklemmt der Gleitstein in der Gleitschiene schraubzwingenartig.

Eine andere Ausführungsform der Erfindung sieht vor, daß der obere Gurtumlenkbeschlag an eine Muffe geschraubt ist, die auf einer Gleitstange verschiebbar angeordnet ist. Die Muffe ist ein C-förmig gebogenes Blechstanzteil, das die Gleitschiene formschlüssig umschließt.

In mittlere Höhe der Muffe sind auf den schmalen Stirnseiten innen zwei ausgeprägte Nocken angeordnet. Diese Nocken gleiten auf den Stirnseiten der Gleitstange. Über diese Nocken kann die Muffe zur Verstellung gekippt werden. Unterhalb des Nockens in Fahrtrichtung unten und oberhalb des gegenüberliegenden Nockens gegen Fahrtrichtung oben ist eine Verzahnung angebracht. Diese Verzahnungen verrasten mit entsprechenden Verzahnungen auf den Stirnseiten der Gleitstange in Ruhestellung. Eine gebogene Blattfeder steckt in einem Loch oberhalb des vorderen Nockens. Die Blattfeder wird in einer Mulde geführt. Die Blattfeder kippt die Muffe über die Nocken und läßt die Verzahnung der Muffe in die Verzahnung der Gleitschiene einrasten.

Die Gleitstange bzw. Gleitschiene ist ein Flacheisen, das formschlüssig von der Gleitmuffe umschlossen wird. Sie wird mit der Karosserie verschraubt.

Bei dieser Ausführungsform sind die wesentlichen Merkmale die Verzahnungen an den Stirnseiten der Gleitstange, die zur Verzahnung der Gleitmuffe passen.

Die beschriebene Ausführungsform funktioniert
wie folgt. In Ruhestellung kippt die Feder die
Muffe über die Nocken. Die Verzahnungen der Muffe
rasten in die Verzahnungen der Gleitschiene. Zur
Verstellung wird über den Umlenkbeschlag oder einen
Knopf oberhalb desselben die Muffe nach hinten
über die Nocken - gegen den Federdruck - gekippt.
Die Verzahnung entrastet. Am Umlenkbeschlag oder
am Knopf angreifend wird die Muffe nach oben oder
unten verschoben. Im Falle eines Unfalles verklemmt
auch die Muffe auf der Gleitschiene schraubzwingenartig.

In Ergänzung zur oben beschriebenen Lösung sieht
die Erfindung eine Erweiterung des Erfindungsgedankens
vor. Anstelle von zwei Verzahnungen kann lediglich
eine Verzahnung, gegebenenfalls in Kombination mit
einem Reibbelag verwendet werden. Die vorliegende
Erfindung sieht außerdem vor, ovale oder runde Elemente
zu verwenden, die z.B. auf einfache Weise und kostengünstig aus Druckguß herstellbar sind. Die aus Druckguß hergestellten Gleitsteine oder Gleitmuffen können
nach der Erfindung auch einstückig mit den Bedienungselementen, z.B. Knöpfen oder Hebelarmen, ausgebildet
sein. Dies gestattet eine konstengünstige Fertigung
des Teils durch Gießen oder Schmieden. Eine weitere
Ausführungsform der Erfindung sieht vor, daß die
Gleitschiene im oberen und/oder unteren Abkröpfungssteg
an den Seitenkanten Ausnehmungen aufweist, so daß
der Gleitstein auf die Schiene geschoben werden kann,
ohne daß die freien Endbereiche der C-förmigen Stege
stören. Diese Höhenverstellvorrichtung ist kostengünstig herstellbar und einfach zu montieren.

0191405

Eine weitere Lösung der erfindungsgemäßen Aufgabe ist vorgesehen, daß das Gleitführungselement eine Gleitschiene ist, die ein gerades Flacheisen aufweist, auf dessen Schmalseite entgegen der Fahrtrichtung eine Verzahnung eingebracht ist, deren untere Zahnflanke abgeschrägt und deren obere Zahnflanke waagerecht oder ungefähr waagerecht ausgebildet ist, und daß das Gleitelement aus einer Gleitmuffe besteht, die im Bereich der Verzahnung eine entsprechende Verzahnung aufweist, wobei im Fahrtrichtungsbereich der Gleitmuffe eine Blattfeder für die Vorspannung zwischen Gleitmuffe und Gleitschiene angeordnet ist.

Eine weitere vorteilhafte Ausführungsform der Erfindung sieht vor, daß das Gleitführungselement eine Gleitschiene aus einem Flacheisen und das Gleitelement eine Gleitmuffe ist, wobei die Gleitschiene zwei Flachseiten und zwei Schmalseiten aufweist und die Schmalseite mindestens einen Zahn trägt, der aus der Ebene des Flacheisens abgebogen ist, und wobei die Gleitmuffe einen dem Zahn entsprechenden Ausschnitt aufweist, der sich etwa von der Längsmitte einer Stirnwandung bis in die Bodenwandung erstreckt, und wobei zwischen der Bodenwandung der Gleitmuffe und der Flachseite der Gleitschiene eine Druckfeder angeordnet ist.

Anhand der Zeichnung wird die Erfindung beispielhaft näher erläutert. Es zeigen:

Fig. 1 das plane Blechteil mit eingewalzter Verzahnung und Befestigungslöchern,

Fig. 2 das C-förmig umgekantete Blechteil - die fertige Gleitschiene -,

Fig. 3 eine Einzelheit der Gleitschiene,

Fig. 4 den Gleitstein mit Befestigungsgewindeloch für Gurtumlenkbeschlag, Gleitnocken, Verzahnungen, Befestigungsloch und Gleitmulde für die Blattfeder,

Fig. 5 schematisch den Zusammenbau der Höhenverstellvorrichtung,

Fig. 6 Alternative des Gleitsteines mit Knopfbetätigung und Knopf,

Fig. 7 ein Anwendungsbeispiel; Verstellung alternativ über den Umlenkbeschlag oder einen Knopf,

Fig. 8 das plane Blechteil für die andere Ausführungsform der Erfindung in das der Gewindedurchzug für die Gurtumlenkung, die Verzahnungen, die Nocken, das Befestigungsloch und die Gleitmulde für die Feder geprägt sind. Alternativ ist eine zusätzliche Befestigung für einen separaten Verstellknopf und der Verstellknopf selbst gezeigt. Unterhalb ist die Blattfeder gezeigt,

Fig. 9 das C-förmig umgekantete Blechteil - die fertige Muffe

Fig.10 die Gleitstange mit stirnseitigen Verzahnungen und Befestigungsschrauben,

Fig.11 schematisch den Zusammenbau der Höhenverstellvorrichtung,

Fig.12 ein Anwendungsbeispiel; Verstellung alternativ über den Umlenkbeschlag oder einen Knopf,

Fig.13 eine alternative Befestigung.

0191405

Fig. 14   ein Anwendungsbeispiel einer erfindungsgemäßen Höhenverstellvorrichtung,

Fig. 15   ein Gleitelement mit einstückig ausgebildetem
          Bedienungselement,

Fig. 16   ein als Gleitschiene ausgebildetes Gleitführungselement, das im oberen abgekröpften
          Bereich Ausnehmungen aufweist und zur
          Führung des in Fig. 15 gezeigten Gleitelements
          geeignet ist,

Fig. 17   ein als abgerundeter Gleitstein ausgebildetes
          Gleitelement,

Fig. 18   ein Gleitführungselement für den Gleitstein
          von Fig. 17,

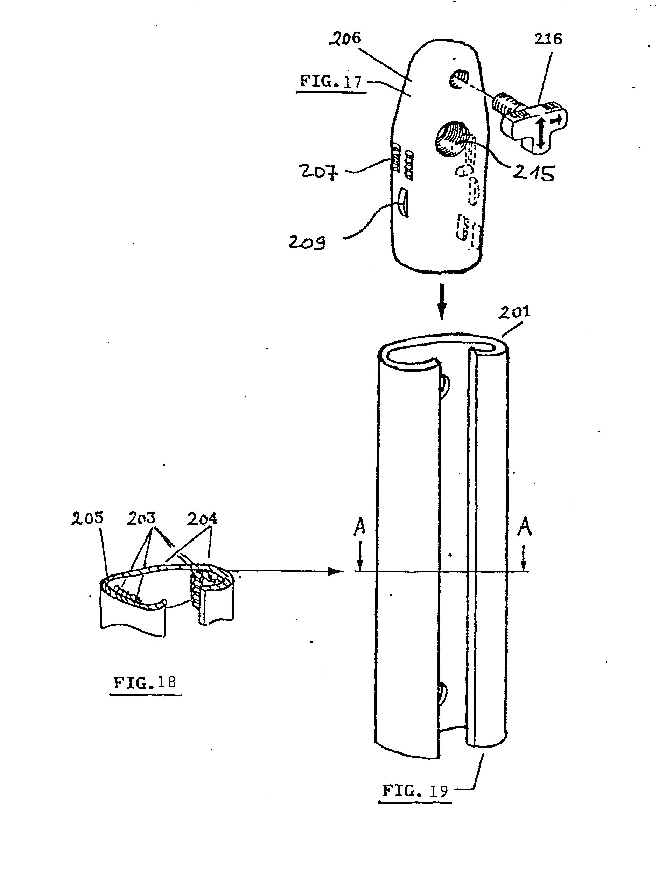

Fig. 19   eine schematische Schnittansicht des
          Gleitführungselements längs Linie A-A
          in Fig. 18,

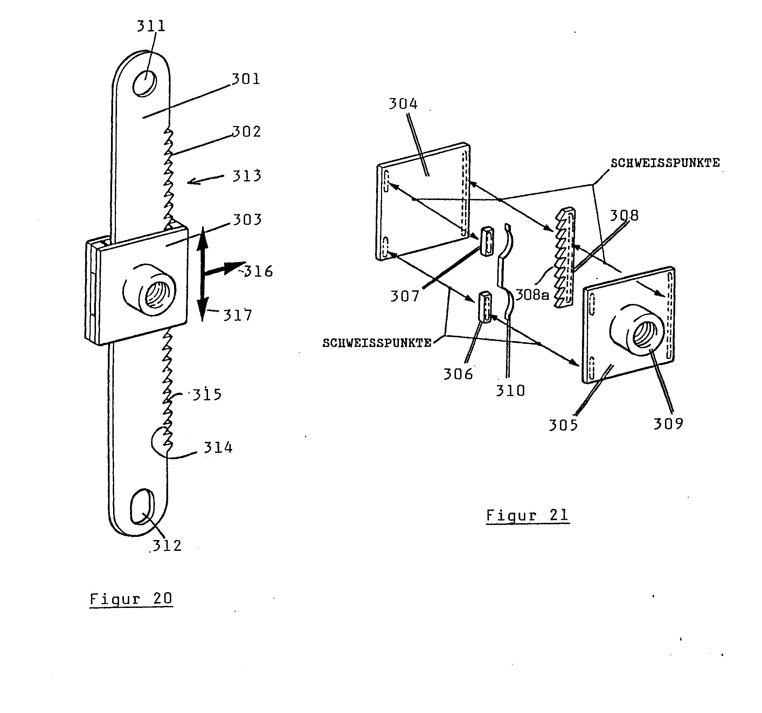

Fig. 20   eine perspektivische Darstellung der
          Höhenverstellvorrichtung,

Fig. 21   den Aufbau des Gleitsteins in einer
          Explosionsdarstellung,

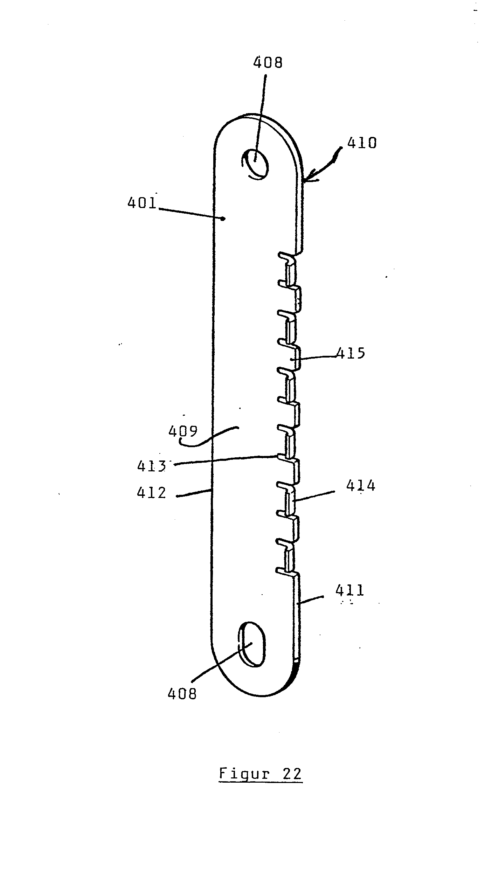

Fig. 22   perspektivisch die Gleitschiene der Höhenverstellvorrichtung,

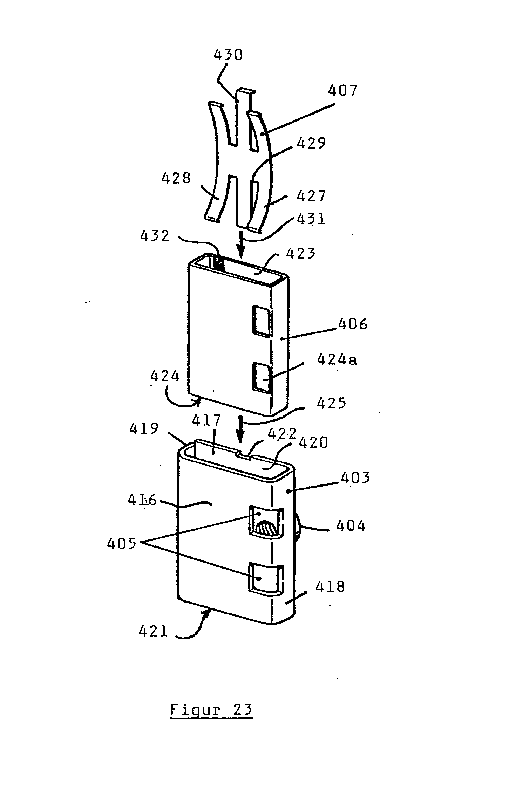

Fig. 23   perspektivisch die Einzelteile der Gleitmuffe
          der Höhenverstellvorrichtung von der
          Vorderseite,

0191405

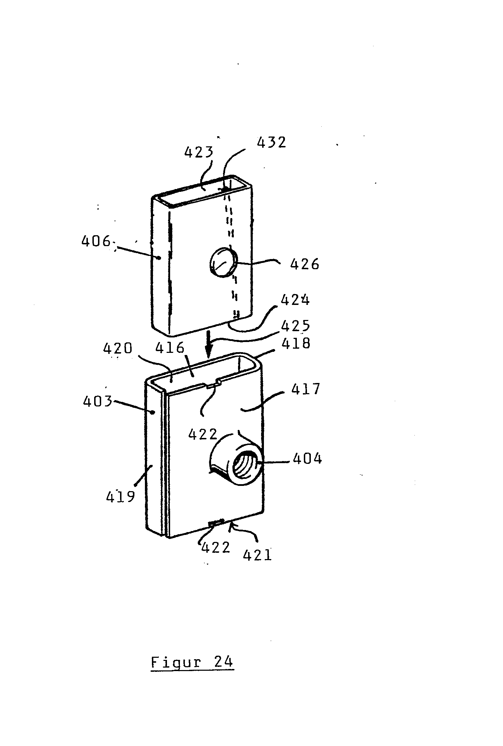

Fig. 24    perspektivisch die Einzelteile der Gleitmuffe (ohne Feder) von der Rückseite,

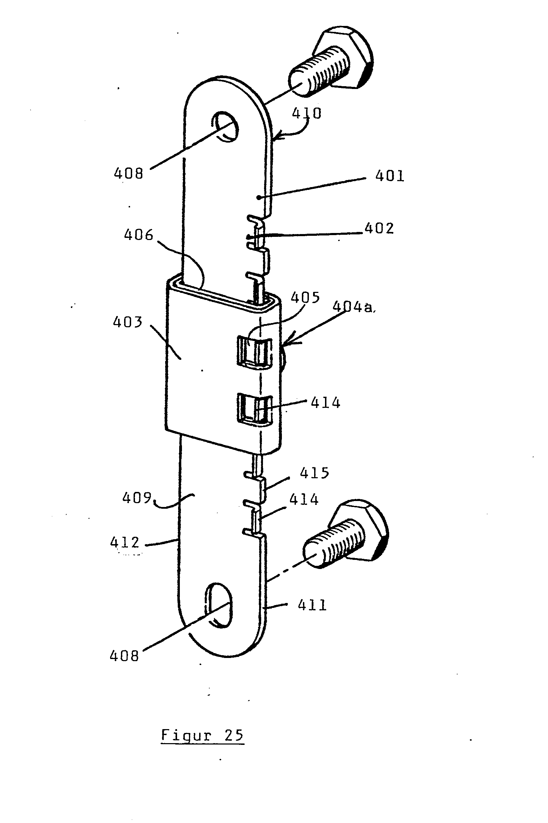

Fig. 25    perspektivisch die Höhenverstellvorrichtung
            zusammengesetzt und

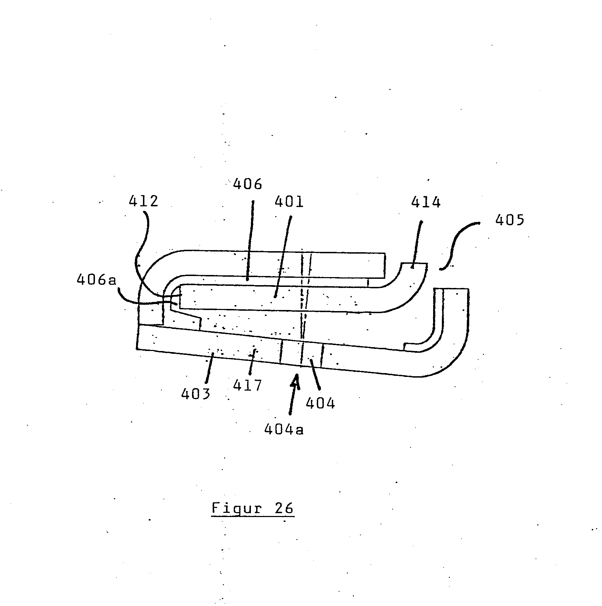

Fig. 26    einen Schnitt durch die Höhenverstellvorrichtung (einschließlich Gleitschiene
            und Muffe).

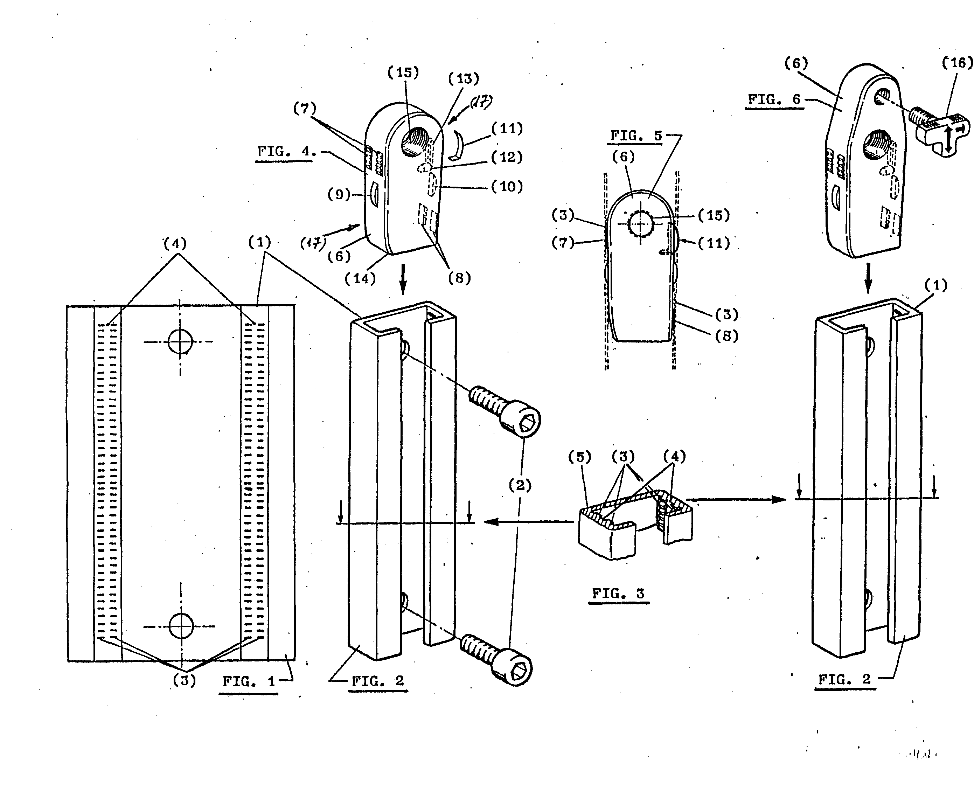

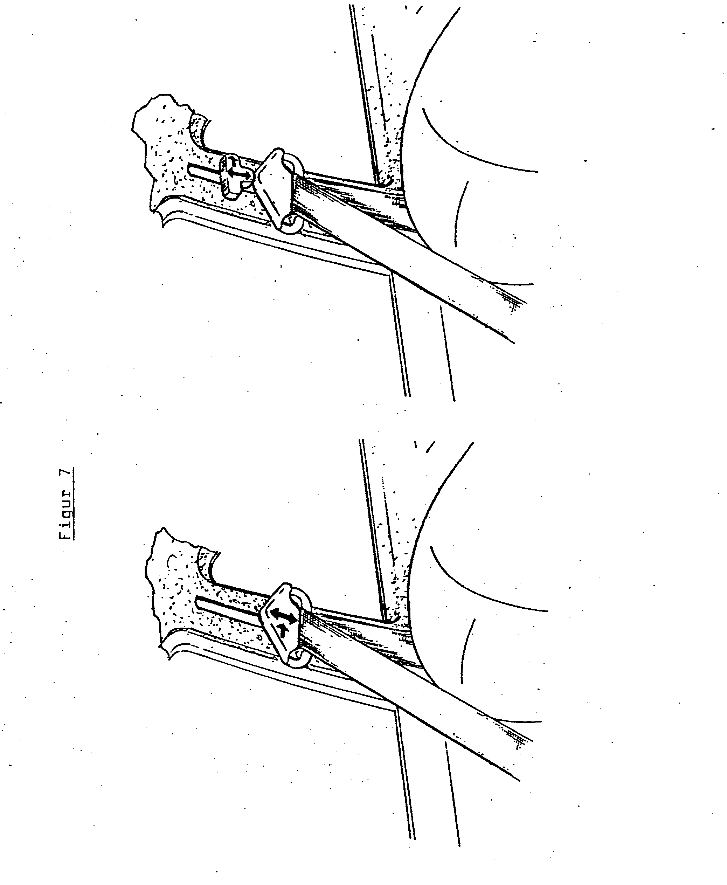

Träger der Gurthöhenverstellung nach den Fig. 1-7
ist eine Gleitschiene 1, die anstelle des oberen
Gurtverankerungspunktes mit zwei Schrauben 2 angeschraubt wird. Die Gleitschiene ist partiell in
und gegen die Zugrichtung mit je zwei aufgewalzten
Verzahnungen 3 versehen. Zwischen den Verzahnungen 3 befindet sich eine Gleitfläche 4.

Der Gleitstein 6 weist an der Vorderseite in Fahrtrichtung zwei Verzahnungen 7 auf, die zu den Verzahnungen 3 passen. Gleiche Verzahnungen 8 sind auf der Rückseite in Fahrtrichtung unten angebracht.

In und gegen Fahrtrichtung sind in der Mitte des Gleitsteines 6 Nocken 9, 10 angebracht. Die Gleitnocken 9, 10 passen zur Gleitebene 4, d.h. ihre Abmessungen sind so gewählt, daß sie auf der Gleitebene gleiten können. In ihrer Längserstreckung sind die Nocken 9, 10 vorzugsweise bogenförmig ausgebildet. An der Rückseite ist oberhalb der Verzahnungen 7 eine Blattfeder 11 in ein Loch 12 eingesteckt und gleitet in einer zur hinteren Gleitebene passenden Mulde 13.

Unterhalb des vorderen Nockens 9 und oberhalb des hinteren Nockens 10 sind die Bereiche 17 abgeschrägt, um ein Verrasten des Gleitsteines 6 mit der Verzahnung 3 der Gleitschiene 1 zu vermeiden. Der Gleitstein 6 ist außerdem an den Ecken 14 abgerundet, wegen der Ungenauigkeiten der Laufschiene in den Ecken.

Die Feder 11 bringt den Gleitstein 6 derart zum Kippen, daß die Verzahnungen 7, 8 in die Verzahnungen 3 verrasten. Selbstverständlich kann auch ein anderes Federsystem verwendet werden.

Am oberen Ende des Gleitsteines 6 ist ein Gewindeloch 15 angebracht zur Befestigung des Umlenkbeschlages des Sicherheitsgurtes.

- 12 -

0191405

Bei Belastung durch den Gurt wird ein schraubzwingenartiger Zustand zwischen Gleitschiene 1 und Gleitstein 6 erzeugt. Zur gewünschten Höhenverstellung wird die Gleitschiene 6 über den Gurtumlenkbeschlag oder einen darüber angebrachten Knopf 16 gegen die Fahrtrichtung - gegen die Federkraft - über den Nocken gekippt. Hierdurch rasten die Verzahnungen 7, 3 aus und der Gleitstein läßt sich verschieben.

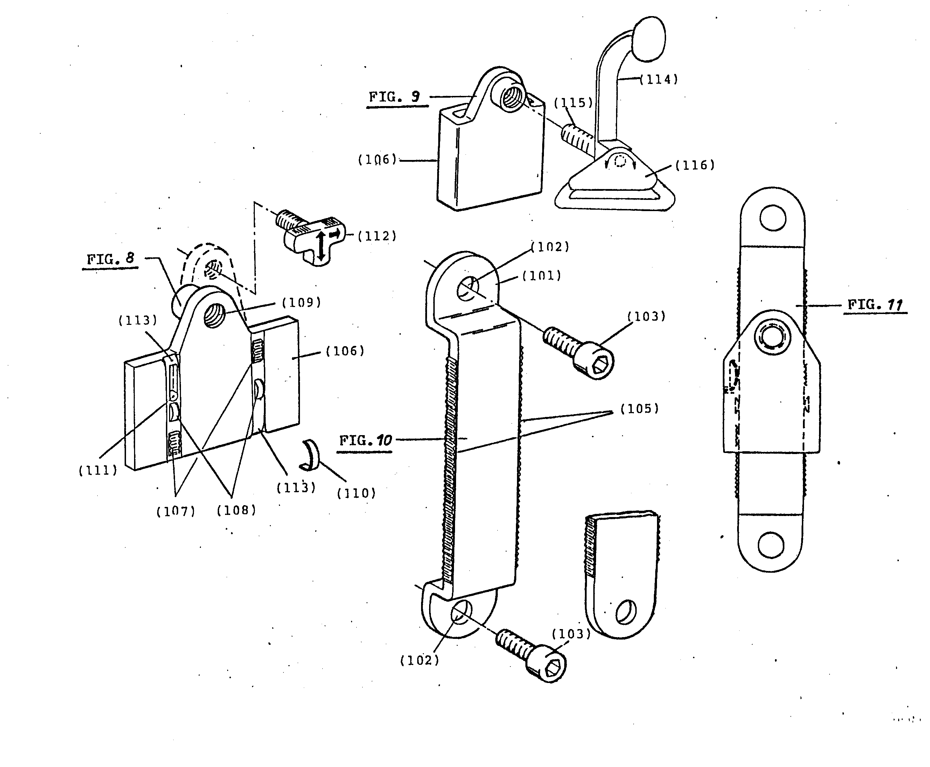

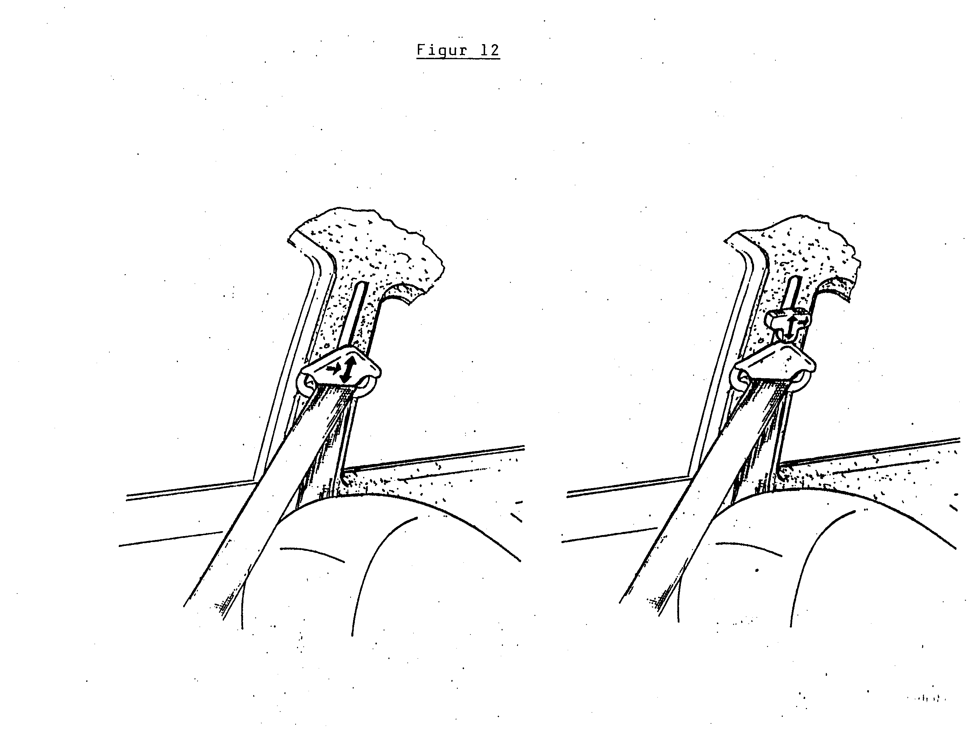

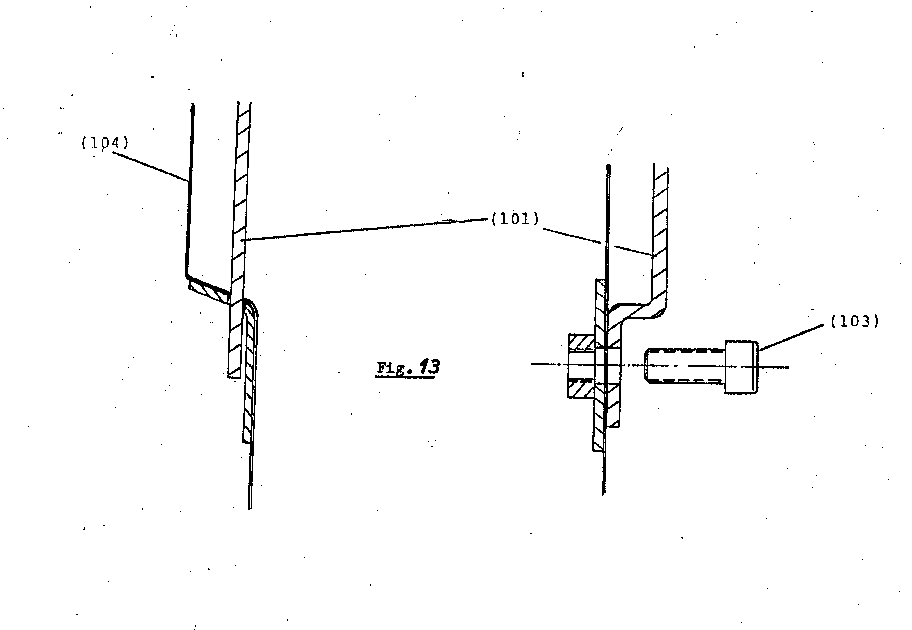

In den Fig. 8 bis 13 wird eine andere Ausführungsform der Erfindung abgebildet. Die Gleitschiene 101 besteht aus einem geraden oder den Erfordernissen entsprechend an den Enden abgekröpften Flacheisen. Die Gleitschiene 101 ist oben und unten mit Löchern 102 zum Anschrauben versehen.

Das Anschrauben erfolgt z.B. mit Schrauben 103. Alternativ kann die untere Schraube eingespart werden, wenn die Gleitschiene unten in einen Schlitz gesteckt wird, der in der Anschraubfläche 104 vorgesehen wird. Selbstverständlich kann die Gleitschiene auch angeschweißt oder angenietet werden.

Die Gleitschiene 101 trägt in und gegen Fahrtrichtung eine Verzahnung 105. Die Gleitmuffe 106 besteht aus einem C-förmig gewalzten Blech. Die Gleitmuffe 106 ist in Fahrtrichtung örtlich unten und gegen Fahrtrichtung örtlich oben derart verzahnt, daß diese Verzahnung 107 zur Verzahnung 105 der Gleitschiene 101 paßt.

In der Mitte der Gleitmuffe 106 sind Nocken 108 ausgeprägt, die auf der Verzahnung 105 gleiten und vorzugsweise in ihrer Längserstreckung bogenförmig ausgebildet sind.

Am oberen Ende der Gleitmuffe 106 ist ein durchgezogenes Gewindeloch 109 zur Befestigung des Sicherheitsgurt-Umlenkbeschlages angebracht.

Oberhalb der in Fahrtrichtung gehenden Verzahnungen 107 ist ein Loch für eine Blattfeder 110 angebracht. Die Blattfeder 110 wird in einer darüber angebrachten Mulde 111 geführt. Selbstverständlich kann das Verkanten der Gleitmuffe 106 auch mit einer andersartigen Federanordnung bewirkt werden.

Gegenüber der Verzahnung 107 ist eine Abrundung 113 der Gleitkanten der Muffe 106 angebracht, damit sich die Muffe nicht verhakt.

Ohne Belastung erzeugt die Feder das notwendige Kippmoment, damit die Verzahnungen 107 der Muffe mit den Verzahnungen 105 der Gleitschiene verrasten. Bei Belastung durch den Gurt wird diese Verrastung unterstützt und ein schraubzwingenähnlicher Effekt erzeugt.

Zur gewünschten Höhenverstellung wird die Gleitmuffe 106 gegen Fahrtrichtung gegen die Federkraft über den Nocken 108 gekippt. Die Verzahnungen 105, 107 entrasten und die Gleitmuffe 106 kann nach unten und oben verschoben werden. Die Verstellung der

- 14 -

Höhe des Gurtumlenkpunktes geschieht über das nach Hintendrücken des Umlenkbeschlages oder des Knopfes 112, der oberhalb vom Umlenkbeschlag des Rückhaltegurtes angebracht ist.

Für die Handhabung der Verstellvorrichtung kann auch ein Hebelarm 114 vorgesehen sein (Fig. 9), der an der Schraube 115 drehfest befestigt ist. Die Schraube 115 dient zur Befestigung des Sicherheitsgurtumlenkbeschlages 116 an der Gleitmuffe 106 oder dem Gleitstein 6 im Gewindeloch 9 bzw. 15. An der Schraube 115 ist der Umlenkbeschlag schwenkbar angeordnet, während der Hebelarm 114 starr mit der Schraube befestigt ist. Der Hebelarm 114 erstreckt sich nach oben und vorzugsweise zum Inneraum der Karosserie und erleichtert das Verkippen des Gleitsteines bzw. der Muffe und deren Verstellung.

0191405

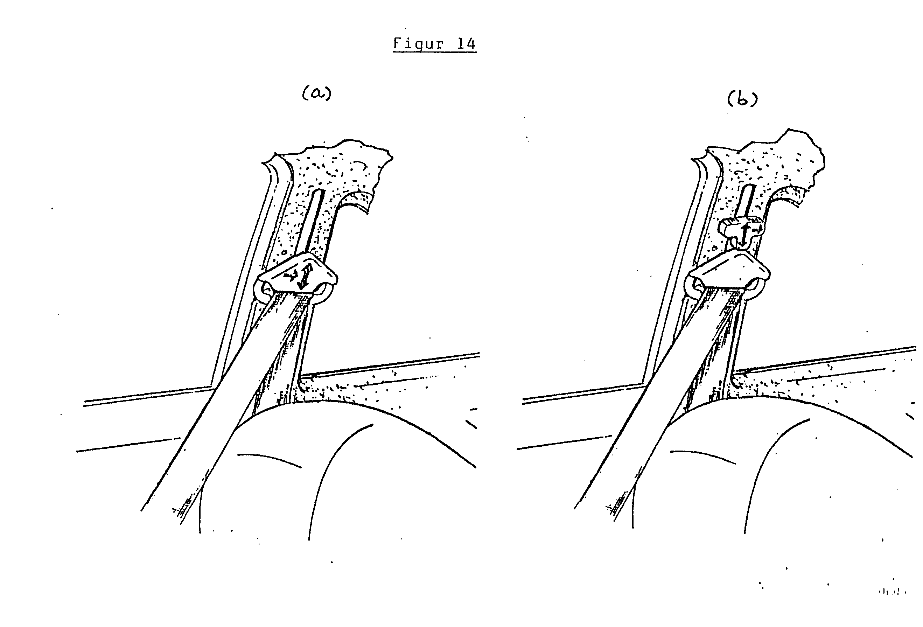

Fig. 14 veranschaulicht schematisch eine in einem Kraftfahrzeug verwendete Höhenverstellvorrichtung. Durch die
den Türholm abdeckende Verkleidung ist lediglich ein
Schlitz des Gleitführungselements sichtbar, längs dem
der obere Gurtumlenkbeschlag stufenlos hin und her verstellbar ist. In Fig. 14(a) dient der Beschlag selbst
als Bedienungselement, während in Fig. 14(b) ein Knopf
als separates Bedienungselement vorgesehen ist.

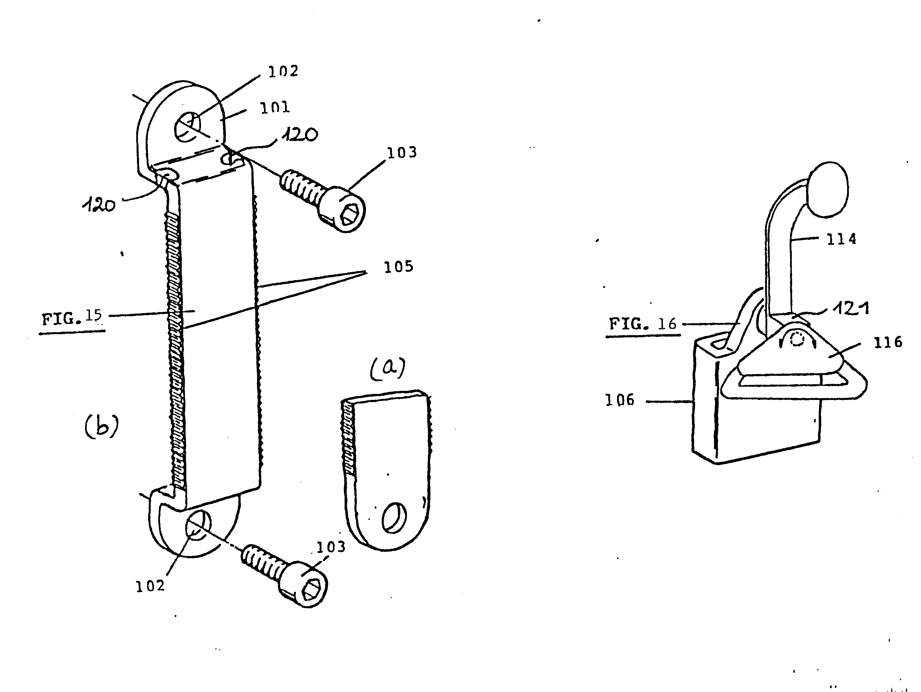

Fig. 15 und 16 zeigen ein erstes Ausführungsbeispiel der
Erfindung. Ein als Gleitschiene 101 ausgebildetes Gleitführungselement besteht aus einem geraden (a) oder den
Erfordernissen entsprechend an den Enden abgekröpften
(b) Flacheisen. Alternativ kann statt eines Flacheisens
Rundstahl verwendet werden, wobei das Gleitelement dann
formmäßig angepaßt wird. Oben und unten sind an der Gleitschiene Abschnitte mit Löchern 102 zum Anschrauben vorgesehen.

Das Anschrauben erfolgt z.B. mit Schrauben 103. Alternativ
kann die untere Schraube eingespart werden, wenn die
Gleitschiene unten in einen Schlitz gesteckt wird, der
in der Anschraubfläche vorgesehen ist. Selbstverständlich kann die Gleitschiene auch angeschweißt oder angenietet werden.

Die Gleitschiene 101 trägt in und gegen Fahrtrichtung eine Verzahnung 105. Der obere abgekröpfte Bereich ist mit Ausnehmungen 120 versehen. Mittels dieser Ausnehmungen kann das Gleitelement, das bei diesem Ausführungsbeispiel die Gleitschiene 101 umgreift, leicht auf der Gleitschiene, auch nach deren Montage, angebracht werden.

Das als Gleitmuffe 106 ausgebildete Gleitelement besteht aus einem C-förmig gewalzten Blech. Die Gleitmuffe 106 ist in Fahrtrichtung örtlich unten und gegen Fahrtrichtung örtlich oben derart verzahnt, daß diese Verzahnung 107 zur Verzahnung 105 der Gleitschiene 101 paßt.

In der Mitte der Gleitmuffe 106 sind Nocken ausgeprägt, die auf der Verzahnung 105 gleiten und vorzugsweise in ihrer Längserstreckung bogenförmig ausgebildet sind.

Für die Handhabung der Verstellvorrichtung ist ein als Hebelarm 114 ausgebildetes Bedienungselement vorgesehen. Der Hebelarm 114 erstreckt sich nach oben und vorzugsweise zum Innenraum der Karosserie und erleichtert das Verkippen und die Verstellung der Gleitmuffe. Im gezeigten Ausführungsbeispiel ist der Hebelarm 114 einstückig mit der Gleitmuffe verbunden. Im Bereich des fest mit der Gleitmuffe 106 verbundenen Abschnitts 121 ist der Gurtumlenkbeschlag 116 angebracht.

Eine nicht dargestellte Federanordnung bewirkt im unbelasteten Zustand ein Verkanten der Verzahnungen der Gleitmuffe 106 und der Gleitschiene 101. Bei Belastung durch den Gurt wird diese Verrastung unterstützt und ein schraubzwingenähnlicher Effekt erzeugt.

Zur gewünschten Höhenverstellung wird die Gleitmuffe
106 gegen Fahrtrichtung gegen die Federkraft über den
Nocken gekippt. Die beiden Verzahnungen entrasten, und
die Gleitmuffe 106 kann nach unten und oben verschoben
werden. Die Verstellung der Höhe des Gurtumlenkpunktes
geschieht über das nach Hinterdrücken des Umlenkbeschlages, der oberhalb vom Umlenkbeschlag des Rückhaltegurtes
angebracht ist.

Bei dem in den Fig. 17 bis 19 dargestellten Ausführungsbeispiel ist das Gleitelement ein abgerundeter Gleitstein 206 mit im wesentlichen ovalem Querschnitt. Der
Gleitstein 206 weist in Fahrtrichtung seitlich zwei
Verzahnungen 207 auf, die zu den Verzahnungen 203 passen.
Gleiche Verzahnungen sind auf der Rückseite in Fahrtrichtung unten angebracht. Die Verzahnungen können abgestumpft ausgebildet sein, so daß die Zähne oben ebene
Flächen aufweisen. Dies erleichtert das Verschieben,
wobei zugleich ein ausreichender Halt der Vorrichtung
im arretierten Zustand gewährleistet bleibt.

In und gegen Fahrtrichtung sind in der Mitte des Gleitsteins 206 Nocken 209 angebracht. Die Gleitnocken 209
passen zur Gleitebene, d.h. ihre Abmessungen sind so
gewählt, daß sie auf der Gleitebene gleiten können.
In ihrer Längserstreckung sind die Nocken 209 vorzugsweise bogenförmig ausgebildet. An der Rückseite ist oberhalb der Verzahnungen eine Blattfeder (nicht gezeigt)
angeordnet.

Durch die abgerundete Ausbildung des Gleitsteins 206 wird ein Verrasten des Gleitsteins mit der Verzahnung 203 der Gleitschiene 201 vermieden. Die Feder bringt den Gleitstein derart zum Kippen, daß die Verzahnungen 207 in die Verzahnungen 203 verrasten. Selbstverständlich kann auch ein anderes Federsystem verwendet werden.

Am oberen Ende des Gleitsteins 206 ist ein Gewindeloch 215 angebracht zur Befestigung des Umlenkbeschlages des Sicherheitsgurtes. Ein in nichtmontierter Position dargestellter Bedienungsknopf 216 ist mit einem Gewindebolzen für die Montage im Gleitstein 206 vorgesehen.

Die Gleitschiene 301 (Fig. 20, 21) besteht aus einem geraden oder den Erfordernissen entsprechend gebogenen Flacheisen. Die Gleitschiene 301 ist oben und unten mit Befestigungslöchern 311, 312 versehen. Die Länge der Gleitschiene 301 ist entsprechend dem gewünschten Verstellweg gewählt. Auf der Schmalseite 313 der Glietschiene 301 ist entgegen der Fahrtrichtung eine Verzahnung 302 eingebracht. Wesentlich ist, daß die untere Zahnflanke 314 abgeschrägt und die obere Zahnflanke 315 waagerecht oder ungefähr waagerecht ausgebildet sind.

Die Gleitmuffe 303 besteht aus einer Grundplatte 304, einer Deckplatte 305, den Zwischenklötzchen 306 und 307 und der Verzahnungsplatte 308.

Die Deckplatte 305 ist mit einem Gewindedurchzug 309 für die Befestigung des Gurtumlenkbeschlages und alternativ für eine Betätigungseinrichtung
(nicht dargestellt) vorgesehen.

Die Zwischenklötzchen 306 und 307 sind die Distanzklötzchen zwischen Grund- und Deckplatte und
dienen zur Lagerung einer Blattfeder 310.

Die Verzahnungsplatte 308 dient als Distanzstück
zwischen Grundplatte 304 und Deckplatte 305 und
zur Verrastung von Gleitmuffe und Gleitstange 301.
Die Blattfeder 310 gibt die Vorspannung zur Verrastung der Verzahnungen 302 und 308. Die Grundplatte
304 und die Deckplatte 305 sowie die Zwischenklötzchen 306 und 307 und die Verzahnungsplatte 308
werden für die Montage lagefixiert entsprechend
den Pfeilen in Fig. 21 und anschließend verschweißt.
Die Klötzchen 306 und 307 sitzen in den Eckbereichen
in Fahrtrichtung und die Verzahnungsplatte 308
an der Schmalseite entgegen Fahrtrichtung, wobei
die Verzahnung 308a in den Innenraum der Muffe
weist. Die Verzahnung 308a entspricht der Verzahnung 302.

Vor dem Aufschieben der Muffe 303 auf die Gleitstange 301 wird die Blattfeder 310 eingesetzt.

Die Höhenverstellung des Sicherheitsgurtumlenkpunktes
nach oben geschieht durch Schieben am Umlenkbeschlag
oder durch Schieben eines entsprechenden Griffes
nach oben. Hierdurch gleiten die Zähne der Muffe
303 auf den Zähnen der Gleitstange 301 nach oben
und springen am Scheitelpunkt über. Demgemäß ist

0191405

der Winkel zwischen der Flanke 314 und 315 so
gewählt, daß ein verschleißarmes Gleiten möglich ist.

Zur Höhenverstellung des Sicherheitsgurtumlenkpunktes
nach unten werden die Zähne der Muffe 303 und
der Gleitstange 301 gegen den Federdruck der Feder 310
horizontal ausgerastet. Dies geschieht durch
horizontale Bewegung des Umlenkbeschlages bzw.
eines entsprechenden Griffes in Pfeilrichtung 316
(Fig. 20) und anschließende Verschiebung nach
unten oder oben in Richtung des Doppelpfeils 317
(Fig. 20). Nach Loslassen des Umlenkbeschlages bzw.
des Griffes springen die Rastzähne wieder ineinander.

Die Erfindung sieht somit eine Sicherheitsgurthöhenverstellung vor, die aus einer Gleitschiene (Flacheisen) besteht. Das Flacheisen wird im Bereich der
oberen Gurtumlenkung verschraubt. Zur Verrastung
einer Muffe ist das Flacheisen entgegen der
Fahrtrichtung mit einer speziellen Verzahnung versehen. Die Verzahnung läßt ein Überspringen
der Verzahnung nach oben zu, nach unten muß
die Muffe vertikal aus der Verzahnung herausgehoben
werden. Die Muffe, an deren vorderer Platte
ein Gewindedurchzug den Gurtumlenkbeschlag trägt,
umschließt die Gleitstange. Gegenüber der Verzahnung
auf der Gleitstange ist eine passende Verzahnung
in der Muffe angebracht. In der Muffe, der Verzahnung
gegenüber, befindet sich eine Blattfeder, die die
Verrastung der Verzahnung klapperfrei garantiert.
Zur Höhenverstellung nach oben genügt ein vertikaler
Druck an der Muffe, am Gurtumlenkbeschlag oder einem entsprechenden Griff. Zur Höhenverstellung nach unten wird über einen horizontalen Druck die Verzahnung ausgerastet. die Muffe läßt sich dann vertikal nach beiden Richtungen bewegen.

Die Höhenverstellvorrichtung nach den Fig. 22 bis 26 weist im wesentlichen die Gleitschiene 401 und die Gleitmuffe 403 auf.

Die Gleitschiene 401 ist ein gerades oder den Erfordernissen entsprechend gebogenes Flacheisen, das oben und unten mit Befestigungslöchern 408 versehen ist und dessen Länge dem gewünschten Verstellweg entspricht. Die Gleitschiene 401 hat zwei Flachseiten 409 und 410 und zwei Schmalseiten 411 und 412. Die Schmalseite 411 befindet sich im eingebauten Zustand der Höhenverstellvorrichtung entgegen der Fahrtrichtung des Fahrzeugs und trägt Zähne 402, 415. Die Zähne 402, 415 ergeben sich aus im gleichen Abstand voneinander angeordneten, senkrecht zur Schmalseite 411 eingebrachten, gleichlangen Einschnitten 413, wobei jeder zweite Zahn 402 aus der Ebene des Flacheisens abgebogen ist und alle Zähne 402 zur gleichen Seite abgebogen sind. Vorzugsweise sind die Zähne 402 nicht auf jeweils ihrer gesamten Länge abgebogen, sondern im Bereich zwischen ihrer Halblänge und dem freien Ende, so daß jeder Zahn 402 einen abgebogenen Raststeg 414 bildet. Die Raststege 414 sind vorzugsweise rechtwinklig abgebogen. Aus dieser Anordnung der Zähne 402 resultiert, daß die jeweils zwischen den Zähnen 402 befindlichen Zähne 415 stehengebliebene Stege des Flacheisens sind. Die Breite des Flacheisens bzw. der Gleitschiene 401 beträgt
zur Tiefe der Einschnitte 413 etwa 1 : 0,25.


Die Gleitmuffe 403 ist ein aus einem gestanzten Blech gebogener quaderförmiger Hohlkörper mit den Bodenwandungen
416, 417, den Stirnwandungen 418, 419 und den Frontöffnungen
420, 421. Die Breite der Gleitmuffe 403 entspricht der Breite
der Gleitschiene 401, die Höhe etwa der Länge, die
fünf Zähne 402, 415 auf der Schmalseite 411 der Gleitschiene
401 einnehmen und die Dicke ist etwas größer als die Dicke
des Flacheisens der Gleitschiene 401 plus dem Raum, den
die Abbiegungen der Raststege 414 erfordern. In der Mitte
der Stirnkanten der Bodenwandung 417 sind Ausnehmungen
22 eingebracht, deren Zweck weiter unten erläutert wird.
Außerdem weist die Bodenwandung 417 einen Gewindedurchzug
404 für die Befestigung des Gurtumlenkbeschlages (nicht
dargestellt) auf.


Wesentlich ist, daß in die Gleitmuffe 403 mindestens ein,
vorzugsweise zwei rechteckige Ausschnitte 405 eingebracht
sind, die übereinander auf Abstand voneinander angeordnet

- 23 -

sind und sich etwa von der Längsmitte der Stirnwandung 418 bis etwa eine gleichweite Strecke in die Bodenwandung 416 erstrecken. Die Höhe der Ausschnitte 405 entspricht der Höhe eines Zahnes 402 und ihr Abstand der Höhe eines Zahnes 415 plus der Dicke zweier Einschnitte 413.

Nach einer besonderen Ausführungsform der Erfindung steckt in der Gleitmuffe 403 formschlüssig mit den Wandungen eine quaderförmige Gleithülse 406 mit entsprechenden Frontöffnungen 423, 424 und fensterartigen Ausschnitten 424a entsprechend den Ausschnitten 405. Die Gleithülse 406 wird gemäß Pfeil 425 in Fig. 24 in die Gleitmuffe 403 geschoben. Für die Halterung bzw. unverlierbare Positionierung kann z.B. ein nach außen stehender kreisringförmiger Rand 426 auf einer Bodenwandung der Gleithülse 406 vorgesehen sein, der in den Gewindedurchzug 404 paßt. Es können aber auch andere geeignete Befestigungs- oder Rastmittel verwendet werden, die gewährleisten, daß die Gleithülse 406 unverschiebbar in der Gleitmuffe 403 steckt.

Die Gleitmuffe 403 ist außerdem mit einer Spannfeder 407 ausgerüstet, die sich innen auf der Bodenwandung 417 abstützt und gegen die Flachseite 410 der Gleitschiene 401 drückt. Wenn eine Gleithülse 406 in der Gleitmuffe 403 steckt, dann stützt sich die Spannfeder 407 gegen die entsprechende Bodenwandung der Gleithülse ab.

Zweckmäßigerweise besteht die Spannfeder 407 aus Federstahl und weist zwei parallel nebeneinander angeordnete, rechteckige, aus ihrer Ebene abgebogene Federarme 427, 428 auf, die in ihrer Längsmitte über einen Verbindungssteg 429 miteinander in Verbindung stehen. Zwischen den Federarmen 427, 428 ist parallel zu diesen verlaufend ein Stütz-

- 24 -

arm 430 an den Verbindungssteg 429 beidseitig angebunden, der nicht abgebogen ist, sondern in einer Ebene gerade verläuft. Die beiden freien Endbereiche des Stützarms 430 sind rechtwinklig umgeknickt und lagern in den Ausnehmungen 422 der Stirnkanten der Bodenwandung 417 der Gleitmuffe 403.

Die Gleitmuffe 403 wird entsprechend den Pfeilrichtungen 431 und 425 (Fig. 23) zusammengesteckt. Dann wird die Gleitschiene 401 in die Gleitmuffe 403 geschoben (Fig. 25) derart, daß die Spannfeder 407 gegen die Flachseite 410 drückt und die Flachseite 409 gegen die Bodenwandung 416 bzw. gegen die entsprechende Bodenwandung der Gleithülse 406 drückt, wobei die abgebogenen Raststege 414 zweier Zähne 410 in die beiden Ausnehmungen 405 greifen derart, daß die Gleitmuffe 403 arretiert ist bzw. unverschiebbar auf der Gleitschiene 401 sitzt. Wird z.B. gegen den Gewindedurchzug 404 in Pfeilrichtung 404a gedrückt, verschiebt sich die Gleitmuffe 403 gegen den Druck der Spannfeder 407 in diese Richtung; dabei weichen die Raststege 414 aus den Ausschnitten 405 und den Fensteröffnungen 423, 424 zurück, so daß die Gleitmuffe 403 nach oben oder unten verschoben werden kann. Ist die gewünschte Stellung der Gleitmuffe 403 erreicht, wird die Spannfeder entlastet und gegebenenfalls die Gleitmuffe noch etwas nach oben oder unten verschoben, bis die beiden dieser Stellung entsprechenden Raststege 414 in die Ausschnitte 415 gleiten.

Vorteilhaft ist, wenn die Gleitmuffe 403 beim Drücken in Pfeilrichtung 404a lediglich eine Kippbewegung um eine vertikale, in der Nähe der Stirnwandung 419 liegende Achse macht (nicht dargestellt), weil sich dadurch die Ausrastbewegung der Raststege 414 kontrolliert auf den zähnetragenden Bereich der Gleitschiene 401 konzentriert. Dies kann erreicht werden, indem z.B. auf der Flachseite 410 im Bereich der Schmalseite 412 ein vorstehender schmaler, sich in Längsrichtung der Gleitschiene erstreckender Steg vorgesehen ist; oder der Steg ist in der Gleitmuffe 403 auf der Bodenwandung 417 bzw. auf der entsprechenden Bodenwandung der Gleithülse 406 an entsprechender Stelle in Form eines Stegs 432 (Fig. 23, 24) aufgebracht.

Nach einer besonderen Ausführungsform der Erfindung wird die Kippbewegung dadurch gewährleistet, daß die Kante 412 der Gleitschiene 401 in einer Ausnehmung 406a der Gleithülse 406 lagert. Auf diese Weise wird erreicht, daß die Gleitmuffe 403 eine Kippbewegung um die Schmalkante 412 ausführt, wenn in Richtung des Pfeiles 404a auf die Gleitmuffe 403 gedrückt wird. Wegen der besseren Übersicht ist in Fig. 26 die Feder 407 nicht eingezeichnet. Sie befindet sich in dem Zwischenraum zwischen der Wandung 417 und der Gleitmuffe 403. Aus Fig. 26 ist noch ersichtlich, daß die Gleithülse 406 nicht unbedingt quaderförmig sein muß, sondern im Bereich der Wandung 417 offen sein kann.

- 26 -

A n s p r ü c h e

1. Höhenverstellvorrichtung für einen Sicherheitsgurt mit einem Gleitführungs- und einem Gleitelement, wobei am Gleitelement der obere Gurtumlenkbeschlag schwenkbar befestigt ist, d a d u r c h
g e k e n n z e i c h n e t , daß das Gleitführungselement im Bereich der seitlichen Führungsflächen jeweils eine feingliedrige Verzahnung
aufweist und daß das Gleitelement im Gleitführungs- ·
element um eine horizontale Achse kippbar gelagert
ist und auf den den Verzahnungsflächen des
Gleitführungselements gegenüberliegenden entsprechenden Flächen diagonal zueinander liegend,
eine vorzugsweise gleiche feingliedrige Verzahnung,
im horizontalen Abstand voneinander, bereichsweise aufweist.

2. Höhenverstellvorrichtung nach Anspruch 1,
g e k e n n z e i c h n e t d u r c h eine
Gleitschiene (1) als Gleitführungselement,
die anstelle des oberen Gurtverankerungspunktes
mit zwei Schrauben an der Karosserie angeschraubt
ist, wobei die Gleitschiene partiell im und gegen
die Zugrichtung mit je zwei aufgewalzten Verzahnungen (3) versehen ist und sich zwischen den Verzahnungen (3) eine Gleitfläche (4) befindet, die Gleitschiene (1) einen Gleitstein (6) als Gleitelement führt, der an der Vorderseite in Fahrtrichtung zwei nebeneinander angeordnete Verzahnungsreihen (7) aufweist, die zu den Verzahnungen (3) passen, und daß gleiche Verzahnungen (8) auf der Rückseite in Fahrtrichtung unten angebracht sind.

3. Höhenverstellvorrichtung nach Anspruch 2, d a d u r c h   g e k e n n z e i c h n e t,   daß in und gegen Fahrtrichtung in der Mitte des Gleitsteines (6) Nocken (9, 10) angebracht sind, die zur Gleitebene (4) passen.

4. Höhenverstellvorrichtung nach Anspruch 3, d a d u r c h   g e k e n n z e i c h n e t,   daß die Nocken (9, 10) in ihrer Längserstreckung bogenförmig ausgebildet sind.

5. Höhenverstellvorrichtung nach einem oder mehreren der Ansprüche 2 bis 4, d a d u r c h   g e k e n n z e i c h n e t,   daß an der Rückseite oberhalb der Verzahnungen (7) eine Blattfeder (11) vorzugsweise in ein Loch (12) eingesteckt ist, die in einer zur hinteren Gleitebene passenden Mulde (13) geleitet.

6. Höhenverstellvorrichtung nach einem oder mehreren der Ansprüche 2 bis 5, d a d u r c h   g e k e n n z e i c h n e t,   daß unterhalb des vorderen

0191405

Nockens (9) und oberhalb des hinteren Nockens (10) die Bereiche (17) abgeschrägt sind.

7. Höhenverstellvorrichtung nach einem oder mehreren der Ansprüche 2 bis 6, d a d u r c h  g e k e n n - z e i c h n e t , daß unterhalb des vorderen Nockens (9) und oberhalb des hinteren Nockens (10) die Bereiche (17) abgerundet sind.

8. Höhenverstellvorrichtung nach einem oder mehreren der Ansprüche 2 bis 7, d a d u r c h  g e k e n n - z e i c h n e t , daß der Gleitstein (6) an den Ecken (14) abgerundet ausgebildet ist.

9. Höhenverstellvorrichtung nach einem oder mehreren der Ansprüche 2 bis 8, d a d u r c h  g e k e n n - z e i c h n e t , daß am oberen Ende des Gleitsteines (6) ein Gewindeloch (15) angebracht ist zur Befestigung des Umlenkbeschlages des Sicherheitsgurtes.

10. Höhenverstellvorrichtung nach Anspruch 1, d a - d u r c h  g e k e n n z e i c h n e t , daß als Gleitführungselement eine Gleitschiene (101) vorgesehen ist, die aus einem geraden oder den Erfordernissen entsprechend an den Enden abgekröpften Flacheisen besteht und in und gegen Fahrtrichtung eine Verzahnung (105) trägt und daß als Gleitelement eine Gleitmuffe (106) vorgesehen ist, die die Gleitschiene (101) umgreift und aus einem C-förmig gewalzten Blech besteht, wobei die Gleitmuffe (106) in Fahrtrichtung örtlich unten und gegen Fahrtrichtung örtlich oben derart verzahnt ist, daß diese Verzahnung (107) zur Verzahnung (105) der Gleitschiene (101) paßt.

11. Höhenverstellvorrichtung nach Anspruch 10, d a - d u r c h g e k e n n z e i c h n e t, daß die Gleitschiene (101) oben und unten mit Löchern (102) zum Anschrauben an die Karosserie versehen ist.

12. Höhenverstellvorrichtung nach Anspruch 10 und/oder 11, d a d u r c h g e k e n n z e i c h n e t, daß in der Mitte der Gleitmuffe (106) Nocken (108) ausgeprägt sind, die auf der Verzahnung (105) gleiten.

13. Höhenverstellvorrichtung nach Anspruch 12, d a - d u r c h g e k e n n z e i c h n e t, daß die Nocken (108) in ihrer Längserstreckung bogenförmig ausgebildet sind.

14. Höhenverstellvorrichtung nach einem oder mehreren der Ansprüche 10 13, d a d u r c h g e k e n n - z e i c h n e t, daß am oberen Ende der Gleitmuffe (106) ein durchgezogenes Gewindeloch (109) zur Befestigung des Sicherheitsgurt-Umlenkbeschlages angebracht ist.

15. Höhenverstellvorrichtung nach einem oder mehreren der Ansprüche 10 bis 14, d a d u r c h g e - k e n n z e i c h n e t, daß oberhalb der in Fahrtrichtung gehenden Verzahnungen (107) ein Loch für eine Blattfeder (110) angebracht ist, wobei die Blattfeder (110) in einer dafür angebrachten Mulde (111) geführt wird.

- 30 -

16. Höhenverstellvorrichtung nach einem oder mehreren der Ansprüche 10 bis 15, d a d u r c h   g e - k e n n z e i c h n e t ,   daß gegenüber der Verzahnung (107) eine Abrundung (113) der Gleitkanten der Muffe (106) angebracht ist.

17. Höhenverstellvorrichtung nach einem oder mehreren der Ansprüche 1 bis 16, g e k e n n z e i c h n e t d u r c h   einen Hebelarm (114), der drehfest am Sicherheitsgurt-Umlenkbeschlag (116), vorzugsweise an einem nicht schwenkbaren Teil des Sicherheitsgurt-Umlenkbeschlages, zweckmäßigerweise an der Schraube (115), die zur Befestigung des Sicherheitsgurt-Umlenkbeschlages  (116) an der Gleitmuffe (106) oder an dem Gleitstein (106) im Gewindeloch (9 bzw. 15) dient, angeordnet ist.

- 31 -

18. Höhenverstellvorrichtung für einen Sicherheitsgurt mit einem Gleitführungselement und mit einem Gleitelement, das am Gleitführungselement verschiebbar angeordnet ist und an dem der obere Gurtumlenkbeschlag schwenkbar befestigt ist, wobei das Gleitführungselement und das Gleitelement durch in Längsrichtung verlaufende Rastflächen miteinander verbunden sind und das Gleitelement zum Lösen des Rasteingriffs von Gleitführungselement und Gleitelement kippbar ausgebildet ist, nach Patent ....... (Patentanmeldung P 35 05 304.6), d a d u r c h g e k e n n z e i c h n e t , daß das Gleitführungselement (101,201) im Bereich einer insbesondere seitlichen Führungsfläche eine feingliedrige Verzahnung (105,203) aufweist zur Bildung einer ersten Rastfläche und daß das Gleitelement (106, 206) im Gleitführungselement um eine horizontale oder Längsachse kippbar gelagert ist und auf der der Verzahnungsfläche des Gleitführungselements gegenüberliegenden entsprechenden Fläche eine vorzugsweise gleiche feingliedrige Verzahnung zur Bildung einer zweiten Rastfläche im horizontalen Abstand voneinander zumindest bereichsweise aufweist.

19. Höhenverstellvorrichtung für einen Sicherheitsgurt mit einem Gleitführungselement und mit einem Gleitführungselement und mit einem Gleitelement, das am Gleitführungselement verschiebbar angeordnet ist und an dem der obere Gurtumlenkbeschlag schwenkbar befestigt ist, wobei das Gleitführungselement und das Gleitelement durch in Längsrichtung verlaufende Rastflächen miteinander verbunden sind und das Gleitelement zum Lösen des Rasteingriffs von Gleitführungselement und Gleitelement kippbar ausgebildet ist, nach Patent ....... (Patentanmeldung P 35 05 304.6), d a d u r c h   g e k e n n z e i c h n e t , daß das Gleitführungselement im Bereich zumindest einer insbesondere seitlichen Führungsfläche einen Reibbelag zur Bildung einer ersten (erster) Rastfläche(n) aufweist und daß das Gleitelement im Gleitführungselement um eine horizontale oder eine Längsachse kippbar gelagert ist und auf den dem Reibbelag des Gleitführungselements gegenüberliegenden entsprechenden Flächen einen Reibbelag im horizontalen Abstand voneinander zumindest bereichsweise aufweist.

20. Höhenverstellvorrichtung nach Anspruch 18 oder 19, d a d u r c h   g e k e n n z e i c h n e t , daß als Rastflächen Verzahnungsflächen  - und Reibbelagflächenpaare miteinander kombiniert sind.

21. Höhenverstellvorrichtung nach einem der Ansprüche 18 bis 20, d a d u r c h   g e k e n n z e i c h - n e t , daß zumindest ein Rastflächenpaar auf der dem Gurtumlenkbeschlag abgewandten Seite angeordnet ist.

22. Höhenverstellvorrichtung nach einem der Ansprüche 18, 20 oder 21, d a d u r c h   g e k e n n - z e i c h n e t , daß die Zähne der Rastverzahnung (105, 203) abgestumpft sind.

23. Höhenverstellvorrichtung nach einem der Ansprüche 18 bis 22, d a d u r c h   g e k e n n z e i c h - n e t , daß als Gleitführungselement eine Gleitschiene (101) aus Rundmaterial vorgesehen ist, und daß als Gleitelement eine Gleitmuffe (106) vorgesehen ist, die die Gleitschiene (101) umgreift und aus gewalztem Blech besteht.

24. Höhenverstellvorrichtung nach einem der Ansprüche 18 bis 22, d a d u r c h   g e k e n n z e i c h - n e t , daß als Gleitführungselement eine Gleitschiene mit quadratischem Querschnitt vorgesehen ist und daß als Gleitelement eine Gleitmuffe vorgesehen ist, die die Gleitschiene umgreift und aus gewalztem Blech besteht.

25. Höhenverstellvorrichtung nach Anspruch 23 oder 24, d a d u r c h   g e k e n n z e i c h n e t , daß die Gleitschiene innen im wesentlichen hohl ist.

26. Höhenverstellvorrichtung nach Anspruch 23 oder 24, d a d u r c h   g e k e n n z e i c h n e t , daß die Gleitschiene aus Vollmaterial besteht.

27. Höhenverstellvorrichtung nach einem der Ansprüche 18 bis 22, d a d u r c h   g e k e n n z e i c h - n e t , daß das Gleitelement als Gleitstein (206) mit mit ovalem oder rundem Querschnitt ausgebildet ist und daß das Gleitführungselement (201) muffenartig, das Gleitelement umgreifend ausgebildet ist.

28. Höhenverstellvorrichtung nach einem der Ansprüche 23 bis 27, d a d u r c h  g e k e n n z e i c h - n e t , daß das Gleitführungselement und/oder das Gleitelement ein (Druck-)Gußteil oder ein Schmiedeteil ist.

29. Höhenverstellvorrichtung nach einem der Ansprüche 18 bis 28, d a d u r c h  g e k e n n z e i c h - n e t , daß ein Bedienungselement (114) einstückig mit dem Gleitelement (106) ausgebildet ist.

30. Höhenverstellvorrichtung nach einem der Ansprüche 18, 19 oder 22 mit gegebenenfalls einem zweiten Rastflächenpaar, bei dem als Gleitführungselement eine Gleitschiene vorgesehen ist, die aus einem geraden oder den Erfordernissen entsprechend an den Enden abgekröpften Flacheisen besteht, als Gleitelement eine Gleitmuffe vorgesehen ist, die die Gleitschiene umgreift und aus einem C-förmig gewalzten Blech besteht, d a d u r c h  g e k e n n z e i c h - n e t , daß oben und/oder unten im abgekröpften Bereich des Gleitführungselements (101) seitliche Ausnehmungen (120) vorgesehen sind.

31. Höhenverstellvorrichtung des oberen Gurtanlenkpunktes eines Sicherheitsgurts, der eine Gleitführungs- und ein Gleitelement aufweist, wobei am Gleitelement der obere Gurtumlenkbeschlag schwenkbar befestigt ist nach Patent ......... (Patentanmeldung P 35 05 304.6), d a d u r c h g e k e n n z e i c h n e t , daß das Gleit- führungselement eine Gleitschiene (301) ist, die ein gerades Flacheisen aufweist, auf dessen Schmalseite (313) entgegen der Fahrtrichtung eine Verzahnung (302) eingebracht ist, deren untere Zahnflanke (314) abgeschrägt und deren obere Zahnflanke (315) waagerecht oder ungefähr waagerecht ausgebildet ist, und daß das Gleitelement aus einer Gleitmuffe (303) besteht, die im Bereich der Verzahnung (302) eine entsprechende Verzahnung (308a) aufweist, wobei im Fahrtrichtungsbereich der Gleitmuffe (303) eine Blattfeder (310) für die Vorspannung zwischen Gleitmuffe (302) und Gleitschiene (301) angeordnet ist.

32. Höhenverstellvorrichtung nach Anspruch 31, d a d u r c h g e k e n n z e i c h n e t , daß die Gleitmuffe (303) aus einer Grundplatte (304), einer Deckplatte (305) sowie Zwischenklötzchen (306 und 307) in den Eckbereichen in Fahrtrichtung und einer Verzahnungsplatte (308) an der Schmalseite entgegen Fahrtrichtung besteht, wobei die Verzahnung (308a) in den Innenraum der Muffe (303) ragt.

33. Höhenverstellvorrichtung nach Anspruch 32, d a d u r c h g e k e n n z e i c h n e t ,

daß die Zwischenklötzchen (306 und 307) die Blattfeder (310) lagern.

34. Höhenverstellvorrichtung nach Anspruch 32 und/oder 33, d a d u r c h  g e k e n n - z e i c h n e t ,  daß die Verzahnungsplatte (308) als Distanzstück zwischen der Grundplatte (304) und der Deckplatte (305) dient.

35. Höhenverstellvorrichtung nach einem oder mehreren der Ansprüche 31 bis 34, d a d u r c h  g e k e n z e i c h n e t ,  daß die Gleitschiene (301) oben und unten Befestigungslöcher (311, 312) aufweist.

36. Höhenverstellvorrichtung nach einem oder mehreren der Ansprüche 31 bis 35, d a d u r c h  g e k e n n z e i c h n e t ,  daß die Deck- platte (305) der Muffe (303) einen Gewindedurchzug für den Gurtumlenkbeschlag trägt.

37. Höhenverstellvorrichtung für einen Sicherheitsgurt mit einem Gleitführungs- und einem Gleitelement, wobei am Gleitelement der obere Gurtumlenk- beschlag schwenkbar befestigt ist, d a d u r c h  g e k e n n z e i c h n e t ,  daß das Gleit- führungselement eine Gleitschiene (401) aus einem Flacheisen und das Gleitelement eine Gleitmuffe (403) ist, wobei die Gleitschiene (401) zwei Flachseiten (409 und 410) und zwei Schmalseiten (411 und 412) aufweist und die Schmalseite (411) mindestens einen Zahn (402) trägt, der aus der Ebene des Flacheisens abgebogen ist, und wobei die Gleitmuffe (403) einen dem Zahn (402) entsprechenden Ausschnitt aufweist, der sich etwa von der Längsmitte einer Stirnwandung (418) bis in die Bodenwandung (416) erstreckt, und wobei zwischen der Bodenwandung (417) der Gleitmuffe (403) und der Flachseite (410) der Gleitschiene (401) eine Druckfeder (407) angeordnet ist.

38. Höhenverstellvorrichtung nach Anspruch 37, d a d u r c h   g e k e n n z e i c h n e t , daß die Schmalseite (411) mehrere Zähne (402) aufweist, wobei zwischen den Zähnen (402) Zähne (415) angeordnet sind, die sich in der Ebene des Flacheisens erstrecken.

39. Höhenverstellvorrichtung nach Anspruch 38, d a d u r c h   g e k e n n z e i c h n e t , daß sich die Zähne (402, 415) aus im gleichen Abstand voneinander angeordneten, senkrecht zur Schmalseite (411) eingebrachten, gleichlangen Einschnitten (413) ergeben, wobei jeder zweite Zahn (402) aus der Ebene des Flacheisens abgebogen ist und alle Zähne (402) zur gleichen Seite abgebogen sind.

40. Höhenverstellvorrichtung nach Anspruch 38 und/oder 39, d a d u r c h   g e k e n n - z e i c h n e t ,   daß die Zähne (402) nicht auf jeweils ihrer gesamten Länge abgebogen sind, sondern im Bereich zwischen ihrer Halblänge und dem freien Ende, so daß jeder Zahn (402) einen abgebogenen Raststeg (414) bildet.

0191405

41. Höhenverstellvorrichtung nach Anspruch 40, d a d u r c h   g e k e n n z e i c h n e t , daß die Raststege (414) rechtwinklig abgebogen sind.

42. Höhenverstellvorrichtung nach einem oder mehreren der Ansprüche 37 bis 41, d a d u r c h g e k e n n z e i c h n e t , daß die Breite des Flacheisens bzw. der Gleitschiene (401) zur Tiefe der Einschnitte (413) etwa 1 : 0,25 beträgt.

43. Höhenverstellvorrichtung nach einem oder mehreren der Ansprüche 37 bis 42, d a d u r c h   g e - k e n n z e i c h n e t , daß die Gleitmuffe (403) ein aus einem gestanzten Blech gebogener, quaderförmiger Hohlkörper ist mit den Bodenwandungen (416 und 417) sowie den Stirnwandungen (418 und 419) und den Frontöffnungen (420 und 421), wobei die Breite der Gleitmuffe (403) der Breite der Gleitschiene (401) entspricht, die Höhe etwa der Länge, die fünf Zähne (402, 415) auf der Schmalseite (411) der Gleitschiene (401) einnehmen und die Dicke etwas größer ist als die Dicke des Flacheisens der Gleitschiene (401) plus dem Raum, den die Abbiegungen der Raststege (414) erfordern.

44. Höhenverstellvorrichtung nach Anspruch 43, d a d u r c h   g e k e n n z e i c h n e t , daß in der Mitte der Stirnkanten der Bodenwandung (417) Ausnehmungen (422) eingebracht sind.

45. Höhenverstellvorrichtung nach Anspruch 43 und/oder 44, d a d u r c h   g e k e n n - z e i c h n e t ,   daß die Bodenwandung (417) einen Gewindedurchzug (404) für die Befestigung des Umlenkbeschlages oder eine Handhabungseinrichtung aufweist.

46. Höhenverstellvorrichtung nach einem oder mehreren der Ansprüche 43 bis 45, d a d u r c h   g e - k e n n z e i c h n e t ,   daß zwei rechteckige Ausschnitte (405) eingebracht sind, die übereinander auf Abstand voneinander angeordnet sind und sich etwa von der Längsmitte der Stirnwandung (418) bis etwa eine gleichweite Strecke in die Bodenwandung (416) erstrecken, wobei die Höhe der Ausschnitte (405) der Höhe eines Zahns (402) und ihr Abstand der Höhe eines Zahns (415) plus der Dicke zweier Einschnitte (413) beträgt.

47. Höhenverstellvorrichtung nach einem oder mehreren der Ansprüche 37 bis 46, d a d u r c h   g e - k e n n z e i c h n e t ,   daß in der Gleitmuffe (403) formschlüssig mit den Wandungen eine vorzugsweise quaderförmige Gleithülse (406) mit entsprechenden Frontöffnungen (423, 424) steckt und fensterartige Ausschnitte (424a) entsprechend den Ausschnitten (405) aufweist.

48. Höhenverstellvorrichtung nach Anspruch 47, d a d u r c h   g e k e n n z e i c h n e t ,   daß für die Halterung der Gleithülse (406) ein nach außen stehender, kreisringsförmiger Rand (426) auf einer Bodenwandung der Gleithülse (406) angeordnet ist, der in den Gewindedurchzug (404) paßt.

49. Höhenverstellvorrichtung nach einem oder mehreren der Ansprüche 37 bis 48, d a d u r c h g e - k e n n z e i c h n e t , daß die Gleitmuffe (403) mit einer Spannfeder (417) ausgerüstet ist, die sich innen auf der Bodenwandung (417) abstützt und gegen die Flachseite (410) der Gleitschiene (401) drückt oder, wenn eine Gleithülse (406) in der Gleitmuffe (403) steckt, sich gegen die entsprechende Bodenwandung der Gleithülse abstützt.

50. Höhenverstellvorrichtung nach Anspruch 49, d a d u r c h g e k e n n z e i c h n e t , daß die Spannfeder (407) aus Federstahl besteht und zwei parallel nebeneinander angeordnete, rechteckige, aus ihrer Ebene gleichsinnig abgebogene Federarme (427, 428) aufweist, die in ihrer Längsmitte über einen Verbindungssteg (429) miteinander in Verbindung stehen.

51. Höhenverstellvorrichtung nach Anspruch 50, d a d u r c h g e k e n n z e i c h n e t , daß zwischen den Federarmen (427, 428) parallel zu diesen verlaufend ein Stützarm (430) an den Verbindungssteg (429) beidseitig angebunden ist, der nicht abgebogen ist, sondern in der Ebene gerade verläuft, wobei die beiden freien Endbereiche des Stützarms (430) rechtwinklig umgeknickt sind und in den Ausnehmungen (422) der Stirnkanten der Bodenwandung (417) der Gleitmuffe (403) lagern.

52. Höhenverstellvorrichtung nach einem oder mehreren der Ansprüche 37 bis 51, d a d u r c h  g e - k e n n z e i c h n e t ,  daß die Gleitmuffe (403) um eine vertikale, in der Nähe der Stirnwandung (419) liegende Achse kippbar auf der Gleitschiene (401) lagert.

53. Höhenverstellvorrichtung nach Anspruch 52, d a d u r c h  g e k e n n z e i c h n e t , daß auf der Flachseite (410) im Bereich der Schmalseite (412) ein vorstehender, schmaler, sich in Längsrichtung der Gleitschiene (401) erstreckender Steg vorgesehen ist.

54. Höhenverstellvorrichtung nach Anspruch 52, d a d u r c h  g e k e n n z e i c h n e t , daß ein Steg (432) in der Gleitmuffe (403) auf der Bodenwandung (417) oder auf der entsprechenden Bodenwandung der Gleithülse (406) angeordnet ist und sich in Längsrichtung erstreckt.

55. Höhenverstellvorrichtung nach Anspruch 52, d a d u r c h  g e k e n n z e i c h n e t , daß die Schmalseite (412) der Gleitschiene (401) in einer Ausnehmung (406a) der Gleithülse (406) etwa formschlüssig lagert.

FIG. 1

FIG. 2

FIG. 3

FIG. 4

FIG. 5

FIG. 6

Figur 7

FIG. 9

FIG. 8

FIG. 10

FIG. 11

(114)
(115)
(116)
(106)
(112)
(109)
(113)
(106)
(111)
(113)
(110)
(107)
(108)
(102)
(101)
(103)
(105)
(103)
(102)

0191405

(103)

(101)

(104)

**Fig. 13**

Figur 14

(a)

(b)

0191405

FIG. 15

(a)

(b)

102
101
120
120
103
105
102
103

FIG. 16

114
121
116
106

206

216

FIG. 17

207

215

209

201

205    203    204

A          A

FIG. 18

FIG. 19

311

301

302

313

303

316

317

315

314

312

Figur 20

304

SCHWEISSPUNKTE

308

307

308a

SCHWEISSPUNKTE

306

310

305

309

Figur 21

0191405

0191405

Figur 22

Figur 23

Figur 24

Figur 25

0191405

Figur 26